# EUROPEAN PATENT APPLICATION

(11) **EP 4 091 576 A1**
(43) Date of publication of application: **23.11.2022**
(21) Application number: 21718159.3
(22) Date of filing: 15.01.2021
(51) Int. Cl.: A61C 13/00, A61C 13/087, A61C 13/093, A61C 13/10, B33Y 10/00, B33Y 50/00, B33Y 80/00

(54) **METHOD OF MANUFACTURING DENTAL PROSTHESES AND DENTAL PROSTHESES**

(30) Priority: 17.01.2020 ES 202030028
(71) Applicant: LABORATORIO DIGITAL HIGH TEETH, S.L., 08403 Granollers Barcelona (ES)
(72) Inventor: ALSINA FONT, Francesc, 08403 Granollers (Barcelona) (ES)
(74) Representative: Herrero & Asociados, S.L.
(86) International application number: PCT/ES2021/070018
(87) International publication number: WO 2021/144492

(57) **Abstract**

The present invention describes a method for the manufacture of dental prostheses where traditional artisanal or purely manual techniques are combined or merged with other more recent ones based on digital design, which comprises obtaining a digital image of the patient's mouth, digitally designing the dental pieces (1) and the gum (4) in a personalized way for each patient, manufacturing both parts separately, mounting them by tonguing-and-grooving and finally treating the prosthesis. Furthermore, the present invention also includes a dental prosthesis that comprises at least one dental piece (1) and a gum, where both are bonded by tonguing-and-grooving means.

## Description

### Object of the invention

The present invention relates, as its name indicates, to both a method of manufacturing dental prostheses, as well as the dental prostheses themselves, both constituting a clear advance both in the quality and in the speed of the final product

Specifically, the invention is directed to the manufacture of dental prostheses, such as dentures, where traditional artisan or purely manual techniques are combined or merged with other more recent ones based on digital design, thus obtaining a result that has the advantages of both techniques.

More specifically, the present invention relates to both new digitally designed dental prostheses and the method, also digital, for the manufacture thereof. Said prostheses therefore replace those commonly referred to as "removable" or "fixed", constituted of acrylic dental pieces, which are manufactured by means of manual or artisan methods. Thanks to it, therefore, a better design is achieved as well as greater precision, which helps to minimize the errors produced by human intervention in the referred artisanal methods.

### Background of the Invention

Currently, the traditional process of manufacturing removable or fixed dental prostheses consists of mounting on a model (a plaster replica of the gum of the patient under treatment) some acrylic dental pieces commonly known as "splint".

These acrylic dental pieces belong to families or collections of dental pieces with standardized geometries that the patient or their specialist chooses according to their preferences (shape and color), oral morphology, resemblance to their own teeth, etc.

These acrylic or "splint" dental pieces have an extension called the neck on their lower base, intended to be mounted with wax on a model (plaster replica of the mouth to be restored), which shall be worked, retouched or manually carved by the prosthetist or specialist so that all the pieces adopt the most appropriate shape for said model, that is, they fit formally and functionally as best as possible to the patient's mouth.

Subsequently, this model with the "splint" acrylic dental pieces already mounted and adjusted on it is placed in a flask or mold to be able to pour liquid resin under pressure that occupies the space of the wax (which acts as the patient's gum) that holds the necks of the dental pieces and, then, proceed to cure the dental prosthesis obtained by adding heat (either to a water bath, microwave, etc.), ending with a final treatment of the prosthesis that gives it the final appearance.

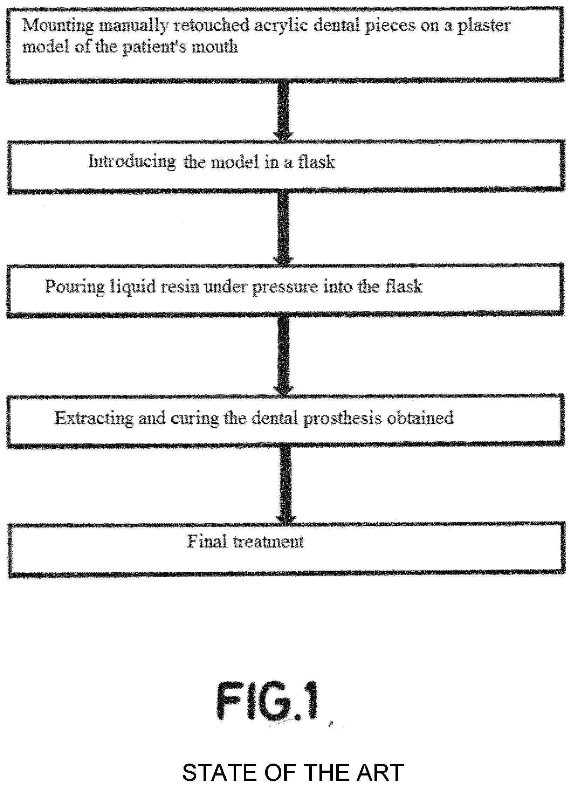

This known method, which is summarized in Figure 1, has the clear disadvantage that it has a high artisanal process, not only in the copy of the patient's gum by means of a plaster mold, but especially in the subsequent carving and bonding of acrylic dental pieces with wax, which, in addition to being time consuming and expensive, increases the risk of committing errors or imperfections and, therefore, that the final prosthesis obtained is not optimal.

This known technique, however, has the advantage of using the aforementioned acrylic or "splint" dental pieces, which, even though they are made of a plastic material, achieve good characteristics, both aesthetic and functional, as well as hardness and resistance.

More specifically, these types of artificial dental pieces are manufactured by combining several different acrylic resins that reproduce the natural layers of enamel and dentin, all of them created based on the polymerization of acrylic monomers, cross-linking and reinforcing agents, acrylic resins, pigments and others non-toxic additives forming a unique composition to achieve the best performance and thus achieve, by bonding the layers, a compact set of appearance and behavior similar to natural dental pieces, both for its color and its stability, as well as its mechanical characteristics (hardness, resistance to abrasion and external agents, etc.). Specifically, these layers of acrylic resin are manufactured on the basis of producing a high molecular weight, strongly cross-linked and reinforced acrylic polymer whose robust link of high molecular weight cross-linked chains provides teeth with great resistance to abrasion and unalterable coloration, which also has a light effect similar to natural teeth. To do this, the starting point is a mixture of high molecular weight polymethylmethacrylate (acrylic resin) and its additive liquid monomer (methyl methacrylate), having added to this mixture the fluorescence, the appropriate pigments according to the desired color and the reinforcement and cross-linking agents necessary to provide each of the layers once molded with the required strength and toughness.

During this process the hardness and resistance to abrasion are adjusted appropriately depending on the degree of cross-linking and reinforcement of each of the layers (enamel-dentin-neck). Thus, a uniform acrylic polymer composition with a medium cross-linking configures the neck layer of the dental piece, which gives it great adhesion and affinity to the base material of the prosthesis or dentures, while the incorporation of a biocompatible reinforcement in the enamel layer and its high degree of cross-linking, provide it with great resistance to abrasion and wear.

Finally, after making said mixture, a viscous and homogeneous mass is formed for each of the different layers that make up the dental pieces. Each of these masses is introduced, once it reaches the optimum pre-curing point, in an automated molding line where they pass in an orderly and selective way to the different molds having the dental shapes to be manufactured, typically by an injection-compression method at high temperature, causing total polymerization.

More specifically, this polymerization is carried out through a process of selective injection-compression molding of the layers, known by its acronym in English SICM (Selective Injection-compression molding), which inhibits the formation of porosities, avoids polymerization contractions and above all achieves the chemical adhesion of the layers, by curing and hardening all at the same time, which gives the tooth greater physical and chemical resistance.

Finally, once the polymerization process has been carried out and therefore the total curing, the dental pieces are already achieved and, after carefully removing them from the molds, they are deburred and polished for their final packaging in the appropriate format.

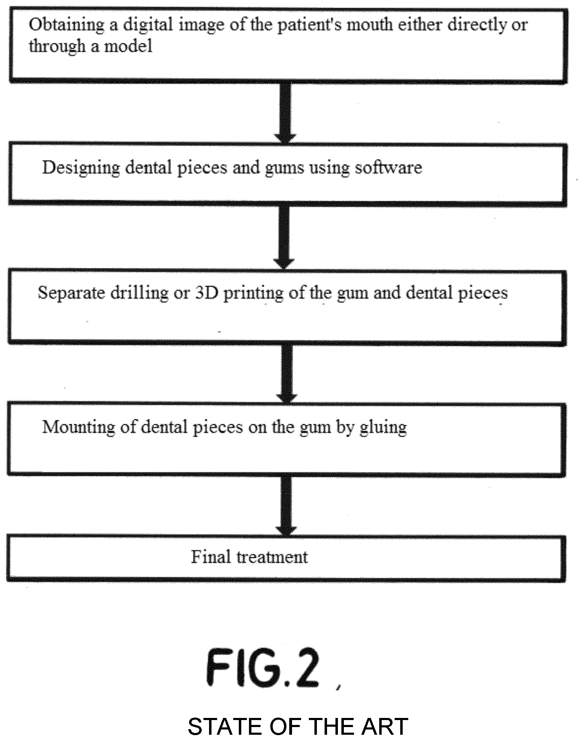

On the other hand, in order to solve the problems or drawbacks of the aforementioned manual process and shown in Figure 1, with the appearance of new digital techniques, methods of manufacturing removable or fixed dental prostheses have been developed that take advantage of the advantages of these techniques and that are schematically shown in Figure 2.

Specifically, this method consists in that, on a digital image of the patient's mouth, obtained either by direct scanning it or by scanning a model obtained by any conventional technique, both the dental pieces and the gum that make up the prosthesis are designed with the help of suitable software.

Once the prosthesis has been designed according to the aesthetic and functional needs of the patient, we proceed to manufacture, separately, on one side the gum and, on the other, the dental pieces.

In the case of the gum, it can be manufactured using 3D printing or drilling, that is, by machining a piece with increased geometry compared to the final one. However, when drilling is used, it has the double drawback of, on the one hand, that it is a long and expensive process due to the amount of material that is wasted and, on the other hand, that it is very difficult to obtain aesthetically results similar to reality due to the complex geometry of the gums.

Similarly, dental pieces can also be made by 3D printing or drilling. However, if they are carried out by drilling as in the case of the gum, this process is on the one hand long and expensive due to the waste of material and, on the other hand, it is also difficult to obtain results that are aesthetically similar to reality due to the geometry of the dental pieces. Furthermore, and even more importantly, the aesthetic appearance of said dental pieces is far from appearing natural given the degree of finish that these types of techniques allow, mainly because they are made of a single-color base material. For this reason, the pieces thus manufactured are usually used only as temporary prostheses intended to be in the mouth for a very short time.

Subsequently, whatever the chosen manufacturing method, the gum and teeth are mounted by gluing with resin or another known component and, finally, the usual final treatment of the prosthesis is carried out, which gives it the final appearance.

Thus, in the state of the art, a method of manufacturing removable or fixed dental prostheses is necessary that, without diminishing the aesthetic and functional quality required for this type of elements, reduces manufacturing times and minimizes errors and imperfections that are committed in eminently manual processes.

### Description of the invention

The process for manufacturing dental prostheses and dental prosthesis included in the present application solve the aforementioned drawbacks in the processes known in the state of the art, resulting in prostheses or dentures that reproduce with total precision and accuracy both the design made by computer that adapts to the patient's mouth, and the dental aesthetics required in a definitive prosthesis, all in a fast and economical way and without detriment to the quality required for this type of definitive prosthesis, as they are performed more precisely, minimizing errors.

Specifically, the invention that is now described consists, on the one hand, in the combination or fusion of the processes already known in the state of the art. That is, from the traditional or artisanal process shown in Figure 1, the method of manufacturing acrylic dental pieces is used through the mentioned process of selective injection-compression molding (SCIM) of the layers that today achieves very good aesthetic and functional results, but with the novelty that said dental pieces are part of digital libraries so that they can be digitally manipulated during the prosthesis manufacturing process.

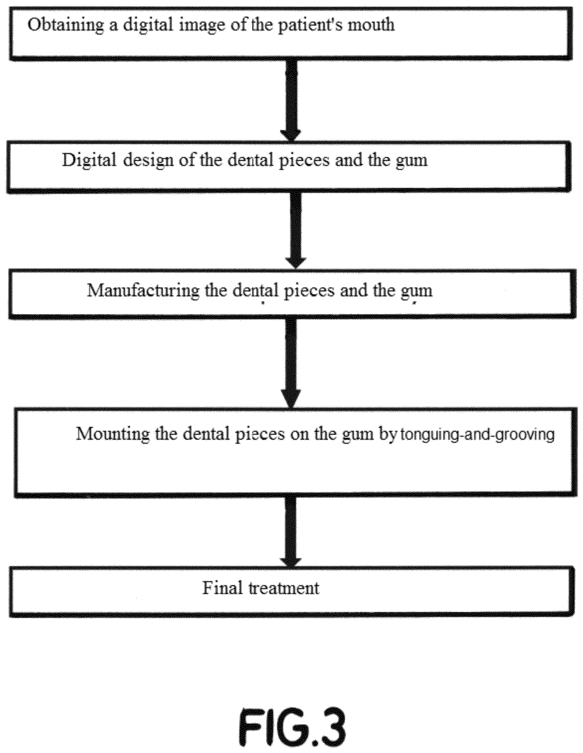

Likewise, the process of the invention uses modern 3D printing processes for the manufacture of the gum, as has already been done in the processes of the state of the art described above and which can be seen in Figure 3.

Specifically, the method of the present invention is based on, from the digital information of a patient's mouth, an existing digital library of dental pieces and a software tool, to design the most suitable dental prosthesis for each patient in a fully digital way. Subsequently, with the digital information obtained in the design phase, the gum is manufactured using a 3D printing technique and the dental pieces are made of acrylic material using a process of selective injection-compression molding (SCIM) of the layers.

On the other hand, the invention is characterized in that the subsequent bonding or mounting of the dental pieces on the gums is carried out by tonguing-and-grooving means between them.

More specifically, the referred dental pieces and the gum are designed in such a way that the dental pieces comprise a hole or female part in their lower base bonding to the gum and, for its part, the gum comprises an extension or male part protruding upwards intended to receive the dental piece, where both parts will fit precisely by virtue of the act that the design of said tonguing-and-grooving is also part of the digital design of them, so once they are manufactured, their coupling will be optimal.

More specifically, both the female part located in the dental piece and the male part located in the gum are designed depending on the type of dental piece, that is, if the dental piece is an incisor, the total sizes of said tonguing-and-grooving will not be the same as if it is an incisor, a molar, etc., since its digital design takes into account the masticatory loads that each one supports, as well as the amount of material available in the dental piece so that it does not affect its aesthetics. In this way, an optimal bonding is achieved in terms of resistance, functionality and aesthetics.

Said tongued-and-grooved bonding will also be reinforced with the use of a suitable cement, glue or acrylic resin to ensure a durable and reliable bonding between the dental pieces and the gum, greatly improving the performance of the processes currently carried out.

### Brief description of the drawings

In order to help a better understanding of the features of the invention, according to a preferred example of a practical embodiment thereof, a series of drawings is provided as an integral part of said description wherein, with an illustrative and nonlimiting nature, the following has been represented:
Figure 1.- Shows a block diagram of a method of manufacturing removable or fixed dental prostheses according to a first technique already known in the state of the art.
Figure 2.- Shows a block diagram of a method of manufacturing removable or fixed dental prostheses according to a second technique already known in the state of the art.
Figure 3.- Shows a block diagram of the method of manufacturing removable or fixed dental prostheses according to the present invention.
Figures 4a), 4b) and 4c) - Show so many other views of a dental piece, in this case a central incisor.
Figures 5a), 5b) and 5c) - Show so many other views of a dental piece, in this case a lateral incisor according to the present invention.
Figures 6a) and 6b) - Show so many other views of a dental piece, in this case a molar, according to the present invention.
Figure 7.- Shows a perspective view of a gum according to the invention, in which the extensions or male parts on which the dental pieces are mounted can be seen.

### Detailed description of a preferred embodiment of the invention

As can be seen in Figures 3 to 7, a preferred embodiment for the method of manufacturing dental prostheses of the present invention comprises the following steps:
- Obtaining a digital image of the patient's mouth.

This digital image can be obtained either directly with an intraoral scanner or by making a physical model of the mouth in plaster and scanning it later. In both cases, detailed information on the morphology of the patient's mouth will be obtained, which can be digitally managed in the process using the appropriate computer equipment and software.
- Digital design of the dental pieces (1) and the gum (4).

From the digital information of the patient's mouth obtained in the previous step and from an existing digital library of dental pieces (1), using the appropriate computer equipment and software, the digital design of the gum (4) and the necessary dental pieces (1) that make up the functional and dimensional personalized dental prosthesis for said patient is performed, where for the subsequent bonding thereof they have tonguing-and-grooving means, specifically, the dental pieces (1) are designed in such a way that they comprise a hole or female part (2) at its lower base (3) bonding to the gum (4) and, for its part, the gum (4) is designed so that it comprises the corresponding extensions or male parts (5) intended to receive each of the dental pieces (1) specific for each position.

As already mentioned, in addition, the tongued-and-grooved bonding, that is, the female parts (2) located in the dental pieces (1) and the corresponding male parts (5) located in the gum (4), are designed based on the type of dental piece (1), its shape and functionality, that is, said bonding has to be large enough to guarantee fastening between dental piece (1) and gum (4) but without affecting the aesthetics of said dental pieces (1).

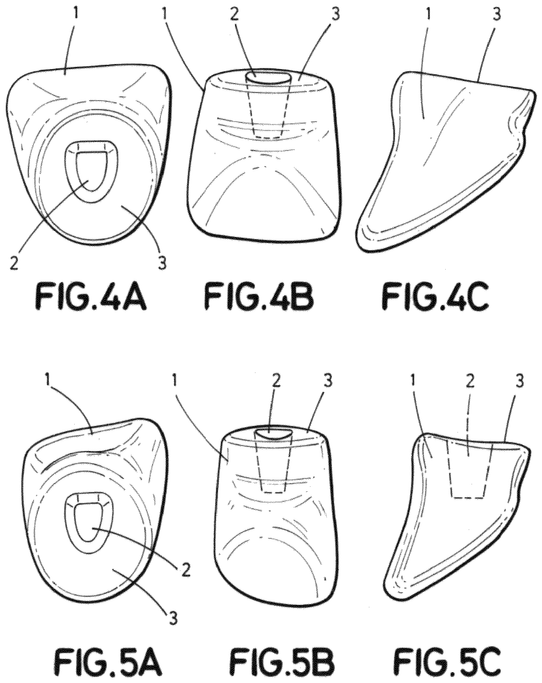

That is, the sizes of each of the tongued-and-grooved bonding between each dental piece (1) and the gum (4) vary for each case, being different for each type of dental piece (1) depending on their mechanical stresses and their morphology as seen in Figures 4 to 7.

In this way, the gum (4) designed for a typical patient will comprise a plurality of connections or male parts (5) emerging superiorly and which may all be different from each other, or at least, different between each type of dental piece (1) (central incisors, lateral incisors, molars, premolars, canines, etc.).

In this sense, the advantage that the male part (5) is located in the gum (4) and not vice versa has its reason in that for the gum (4) to receive a male-type connection from the dental piece (1) in an adequate length, said female part would in some cases need to be inserted into the osseous bed of the patient, which, in addition to delaying and making the process more expensive, would obviously entail significant discomfort for the patient derived from the need to make holes for the accommodation of the female part in his/her osseous bed.

On the other hand, in order to facilitate the subsequent mounting between the dental pieces (1) and the gum (4), the connections or female and male parts (2, 5) are designed so that said mounting is unequivocal, that is, that each dental piece (1) can only be mounted in a single position on the corresponding male part (5) on the gum (4).

Figures 4 to 7 show a possible embodiment of the invention in which the female part (2) present in the dental piece (1) and the male part (5) of the gum (4) have a conical half-round shape which ensures that both can only be mounted in a single and unmistakable position, defined during the digital design step, and therefore eliminates the possibility of alignment or positioning errors when both parts are mounted to form the prosthesis.
- Actual manufacture of dental pieces (1) and gum (4).

Subsequently, with the digital information obtained in the design phase, the dental pieces (1) and the gum (4) are manufactured separately. More specifically, according to a possible preferred embodiment, on the one hand, the gum (4) is manufactured by means of a 3D printing technique using suitable materials and, on the other hand, the dental pieces (1) are manufactured in acrylic material also preferably using a process of selective injection-compression molding (SCIM) of the layers.
- Mounting the dental pieces (1) on the gum (4) by tonguing-and-grooving.

Once the dental pieces (1) and the gum (4) have been manufactured, they are mounted to each other by tonguing-and-grooving which, by virtue of the male (5) and female (2) elements or parts described above, it is carried out quickly and without errors since they only allow mounting in a single unmistakable position. Finally, according to a preferred embodiment, the tongued-and-grooved bonding between dental piece (1) and gum (4) is reinforced with the use of a suitable cement, glue or acrylic resin that ensures a durable and reliable bonding between the referred dental pieces (1) and the gum (4), greatly improving the performance of the processes currently carried out.
- Final treatment of the prosthesis.

Finally, once the mounting of the dental pieces (1) on the gum (4) is completed and the dental prosthesis is obtained, it is subjected to a final treatment that gives it the final appearance, for example, a smoothing-down, polished and glazing treatment.

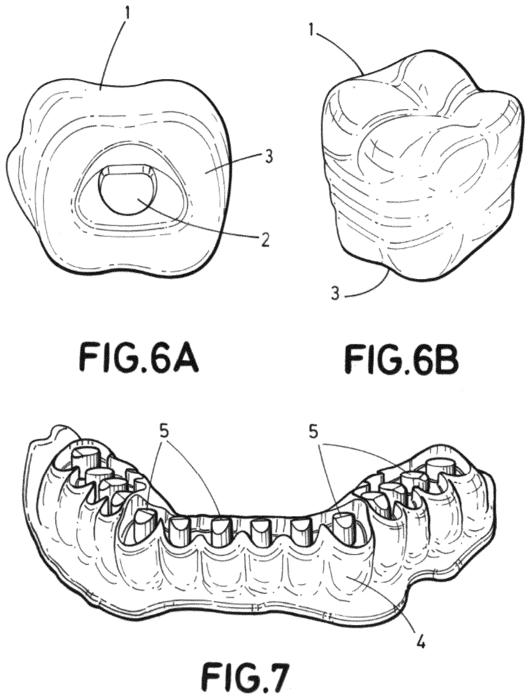

Finally, as can be seen in Figures 4 to 6, they show different types of dental pieces (1), specifically, in Figure 4 a central incisor is shown, in Figure 5 a lateral incisor is shown and Figure 6 shows a molar, according to the present invention.

In all of them, the hole that makes up the female part (2) located in its lower base (3) is clearly seen, which will serve for the connection of the male part (5) that the gum (4) has and that can be seen in Figure 7.

In addition, as can be seen in said figures, the female parts (2) located in the dental pieces (1) have different sizes depending on the type of dental piece (1) where they are located, since these sizes are dictated both by the shape of the dental piece (1) and its functionality, being necessary a greater tongued-and-grooved section or size when masticatory load and/or the mechanical forces or stresses to which it is subjected are greater when it is operative on the patient's mouth. This, of course, also conditions the size of the male parts (5) of the gum (4) on which the corresponding dental pieces (1) will be mounted.

On the other hand, it is also noticeable in said figures that both the female parts (2) of the dental pieces (1) and the corresponding male parts (5) present in the gum (4) have a design that allows their tonguing-and-grooving in a single unmistakable position, having chosen for the examples shown in said figures that having a conical half-round shape, but it can be any other that fulfills that function and does not prevent a correct tonguing-and-grooving.

Finally, according to another possible embodiment, either the inner surface of the female part (2) of the dental piece (1), or the outer surface of the male part (5) of the gum (4), or both, may have gripping means such as small bumps, roughness, scratches, etc. that facilitate the action of a cement, glue or acrylic resin used to ensure a durable and reliable bonding between the dental pieces and the gum.

## Claims

1. Method of manufacturing dental prosthesis **characterized in that** it comprises the steps of:
- Obtaining a digital image of the patient's mouth;
- From the digital information of the patient's mouth obtained in the previous step, carrying out the digital design of the dental pieces (1) and the gum (4) so that both include tongue-and-groove means to bond to each other;
- With the digital information obtained in the previous digital design phase, actually manufacturing the dental pieces (1), on the one hand, and the gum (4), on the other hand;
- Mounting the dental pieces (1) on the gum (4) by tonguing-and-grooving; and
- Finally treating the prosthesis.

2. Method of manufacturing dental prostheses according to claim 1, **characterized in that** the gum (4) is manufactured using a 3D printing technique and the dental pieces (1) are manufactured in acrylic material using a process of selective injection-compression molding of the layers.

3. Method of manufacturing dental prostheses according to any of the preceding claims, **characterized in that** the tongue-and-groove means are designed so that the dental pieces (1) comprise a female part (2) at its lower base (3) bonding to the gum (4) and the gum (4) in turn comprises the corresponding male parts (5).

4. Method of manufacturing dental prostheses according to claim 3, **characterized in that** the sizes of the female parts (2) located in the dental pieces (1) and of the corresponding male parts (5) located in the gum (4) are designed according to the mechanical stresses and the morphology of each dental piece (1).

5. Method of manufacturing dental prostheses according to any of the preceding claims 3 or 4, **characterized in that** the tongue-and-groove means are designed in such a way that each dental piece (1) can only be mounted in a single unmistakable position on the corresponding male part (5) of the gum (4).

6. Method of manufacturing dental prostheses according to any of the preceding claims, **characterized in that** the tongue-and-groove bonding between the dental piece (1) and the gum (4) is reinforced with the use of a cement, glue or acrylic resin between them.

7. Method of manufacturing dental prostheses according to any of the preceding claims, **characterized in that** once the mounting of the dental pieces (1) on the gum (4) is completed, the final treatment carried out is smoothing down, polishing and glazing.

8. Method of manufacturing dental prostheses according to any of the preceding claims, **characterized in that** for the digital design of the dental pieces (1) an existing digital library of dental pieces (1) is used.

9. Method of manufacturing dental prostheses according to any of the preceding claims, **characterized in that** the digital image of the patient's mouth is obtained directly with an intraoral scanner or by scanning a physical model of the patient's mouth.

10. Dental prosthesis comprising at least one dental piece (1) with a lower base (3), and a gum (4), **characterized in that** it also comprises tongue-and-groove means for mounting said dental piece (1) and said gum (4 ) to each other, wherein the dental piece (1) comprises a female part (2) at its lower base (3) and the gum (4) comprises the corresponding male part (5).

11. Dental prosthesis according to claim 10, **characterized in that** the sizes of the female parts (2) located in the dental pieces (1) and of the corresponding male parts (5) located in the gum (4) vary for each type of dental piece (1).

12. Dental prosthesis according to any of claims 10 or 11, **characterized in that** the female parts (2) of the dental pieces (1) and the corresponding male parts (5) of the gum (4) have a design that allows their tonguing-and-grooving in a single unmistakable position.

13. Dental prosthesis according to claim 12, **characterized in that** the female parts (2) of the dental pieces (1) and the corresponding male parts (5) of the gum (4) have a conical half-round shape.

14. Dental prosthesis according to any of claims 10 to 13, **characterized in that** the inner surface of the female part (2) of the dental piece (1) and/or the outer surface of the male part (5) of the gum (4) , comprise gripping means.
